# EUROPÄISCHE PATENTSCHRIFT

(11) **EP 3 292 386 B1**
(45) Veröffentlichungstag und Bekanntmachung des Hinweises auf die Patenterteilung: **10.03.2021**
(21) Anmeldenummer: 16724269.2
(22) Anmeldetag: 02.05.2016
(51) Int. Cl.: G01M 3/04, G01M 3/18

(54) **LECKMESSANORDNUNG ZUR VERLEGUNG IN EINER WÄRMEDÄMMUNG ZWISCHEN EINEM INNEN- UND EINEM AUSSENROHR EINER WASSERLEITUNG**
DEVICE FOR MEASURING OF LEAKS THAT IS SUITABLE FOR RUNNING IN HEAT INSULATION BETWEEN THE INSIDE AND OUTSIDE PIPES OF A WATER PIPE
DISPOSITIF POUR MESURER DES FUITES QUI PEUT ÊTRE AGENCÉ ENTRE LE TUYAU INTÉRIEUR ET LE TUYAU EXTÉRIEUR D'UN TUYAU D'EAU

(30) Priorität: 05.05.2015 AT 503622015
(43) Veröffentlichungstag der Anmeldung: 14.03.2018
(73) Patentinhaber: KE KELIT GmbH, 4020 Linz (AT)
(72) Erfinder: RATSCHMANN, Elmar, 4202 Hellmonsödt (AT); HALADA, Lucian, 4040 Linz (AT)
(74) Vertreter: Hübscher & Partner Patentanwälte GmbH
(86) Internationale Anmeldenummer: PCT/AT2016/050121
(87) Internationale Veröffentlichungsnummer: WO 2016/176707

(56) Entgegenhaltungen:
- DE-A1- 3 503 391
- DE-A1- 4 309 411
- DE-A1- 4 309 411
- GB-A- 919 517
- GB-A- 919 517
- JP-A- S6 186 630

## Beschreibung

### Technisches Gebiet

Die Erfindung bezieht sich auf eine Leckmessanordnung zur Verlegung in einer Wärmedämmung zwischen einem Innen- und einem Außenrohr einer Wasserleitung mit einer einen Teil einer Messschaltung bildenden, entlang der Wasserleitung verlaufenden Fühlerader.

### Stand der Technik

Um undichte Stellen in einem wasserführenden Innenrohr beispielsweise einer Fernwärmeleitung orten zu können, ist es bekannt (EP 2 112 491 A1), in der Wärmedämmung zwischen einem stählernen Innenrohr und einem äußeren Kunststoffrohr zwei zu einer elektrischen Messschleife verbindbare Messadern vorzusehen, um mithilfe dieser Messadern und dem Innenrohr als Messerde die Entfernung einer undichten Stelle des stählernen Innenrohrs vom Anschluss der Messadern an einer Messeinrichtung feststellen zu können. Das an der Leckstelle aus dem Innenrohr austretende Wasser durchfeuchtet die Wärmedämmung, wodurch sich der elektrische Widerstand ändert. Die Lage der Leckstelle kann demnach durch eine Widerstandsmessbrücke bestimmt werden, über die üblicherweise der ohmsche Widerstand zwischen dem stählernen Leitungsrohr und einer Fühlerader gemessen wird, die mit der Rückführader eine Messschleife bildet. Da sich dieses Ortungsverfahren vor allem für weniger feuchte Fehlerstellen eignet, wird häufig auch ein zweites insbesondere für feuchte Fehlerstellen geeignetes Messsystem eingesetzt, das auf einer Laufzeitmessung eines an der niederohmig gewordenen, nassen Stelle reflektierten Impulses basiert, wobei die Ortung zwischen der Fühlerader und der durch das Innenrohr gebildeten Messerde erfolgt. Es können daher bei einer entsprechenden Wahl der ohmschen Widerstände der Messadern mit einer Leitungsanordnung beide Messverfahren durchgeführt werden. Das Patentschrift GB 919 517 A beschreibt eine Leckmessanordnung mit zwei Messadern und eine wasserlösliche Isolierung zwischen den beiden Messadern.

Voraussetzung für beide Messverfahren ist, dass die im Bereich einer Leckstelle auftretende Feuchte den ohmschen Widerstand zwischen der Fühlerader und einer zweiten Messader, insbesondere einer Messerde, entsprechend herabsetzt, was einen entsprechenden Feuchtigkeitsdurchtritt bedingt. Werden die Messadern zwischen dem wasserführenden Innenrohr und dem Außenrohr der Wasserleitung in einem entsprechenden Abstand voneinander in den Schaumstoff der Wärmedämmung eingebunden, so ergeben sich diesbezüglich keine Schwierigkeiten. Die Messadern bedingen allerdings bei ihrer Einbettung in die Wärmedämmung einer vergleichsweise aufwendigen Einzelhandhabung, wobei keine Möglichkeit besteht, das Ansprechen der Leckmessanordnung beispielsweise von der Temperatur des Leckwassers abhängig zu machen.

### Darstellung der Erfindung

Der Erfindung liegt somit die Aufgabe zugrunde, eine Leckmessanordnung zu schaffen, die eine Abhängigkeit des Ansprechens von bestimmten Eigenschaften der auftretenden Feuchte ermöglicht und die Voraussetzungen für eine einfache Handhabung mit sich bringt.

Ausgehend von einer Leckmessanordnung der eingangs geschilderten Art löst die Erfindung die gestellte Aufgabe durch eine Wasserleitung mit einer Leckmessanordnung nach Anspruch 1.

Durch das Vorsehen eines geschlossenen Mantels, innerhalb dessen die Fühlerader angeordnet ist, wird zunächst aufgrund des dadurch bedingten mechanischen Schutzes der Messader die Handhabung erleichtert und darüber hinaus die Voraussetzung geschaffen, den Zutritt der Feuchte innerhalb der Wärmedämmung zwischen Innen- und Außenrohr der Wasserleitung von der Wasserlöslichkeit des für diesen Mantel eingesetzten Polymers abhängig zu machen. Dies bedeutet, dass nicht jede Feuchtigkeit innerhalb der Wärmedämmung zu einer Leckwarnung führen muss, sondern nur dann durch die Leckmessanordnung erfasst wird, wenn der Mantel örtlich durch die auftretende Feuchtigkeit ausreichend für einen Feuchtedurchtritt zur Fühlerader aufgelöst wird. Die Wasserlöslichkeit kann zu diesem Zweck durch bestimmte, an sich bekannte Maßnahmen bei unterschiedlichen wasserlöslichen Polymeren eingestellt werden, sodass aufgrund der jeweiligen Auswahl und Einstellung der wasserlöslichen Polymere Mäntel zur Verfügung gestellt werden können, die unterschiedlichen Anforderungen entsprechen. Für Fernwärmeleitungen ist es insbesondere vorteilhaft, den Mantel aus einem wasserlöslichen Polymer herzustellen, dessen Löslichkeit von der Temperatur abhängt. In diesem Fall wird eine Leckwarnung nur dann ausgelöst, wenn die Leckwassertemperatur einen Schwellwert übersteigt. Kaltes Wasser, das über das Außenrohr in die Wärmedämmung eintritt, kann demnach keine Leckstellenmessung auslösen.

Als wasserlösliche Polymere kommen für den Mantel vorzugsweise Polymere in Frage, die wenigstens ein Strukturelement aus einer Elementegruppe aufweisen, die glucoseartige Zucker, Amidgruppen, Ether und Polyole umfasst.

Als glucoseartige Zucker können vorteilhaft funktionalisierte Cellulosen, wie Carboxymethyl- oder Methylcellulose bzw. Stärke eingesetzt werden. Carboxymethylcellulose ist als Natriumsalz in Wasser löslich. Durch die Zugabe von Säuren kann die Wasserlöslichkeit eingestellt werden, wobei eine vollständige Überführung in Carbonsäure eine Wasserunlöslichkeit nach sich zieht. Methylcellulosen sind im kalten Wasser besser löslich als im heißen. Die Anzahl der Methylgruppen nimmt Einfluss auf die Löslichkeit der Methylcellulosen. Stärke ist wiederum im kalten Wasser unlöslich und geht im heißen Wasser in eine kolloidale Lösung über, die beim Abkühlen gelartig erstarrt.

Als Amid kann vorzugsweise Polyacrylamid oder Polyvinylpyrrolidon zum Einsatz kommen. Polyacrylamid ist in Wasser löslich und wird im Wasser angequollen. Polyvinylpyrrolidon ist vollständig wasserlöslich.

Auf der Basis von Ether eignen sich für den Mantel vor allem Polymethylvinylether bzw. Polyethylenglycol (PEG) bzw. Polypropylenglycol (PPG).

Polymethylvinylether ist wie PEG im Wasser vollständig löslich. PPG ist jedoch nur bei niedriger Molmasse wasserlöslich, sonst nicht. Durch eine Mischung von PEG und PPG lassen sich unterschiedliche Löslichkeiten einstellen.

Auf der Basis von Polyolen eignet sich insbesondere Polyvinylalkohol bzw. Derivate davon für den Mantel. Polyvinylalkohol ist mit einem Substitutionsgrad von 13 % Vinylacetateinheiten vollständig wasserlöslich, bei einer vollständigen Hydrolysierung jedoch nur noch im heißen Wasser. Der Hydrolysegrad bestimmt somit die temperaturabhängige Wasserlöslichkeit, was einen solchen Mantel vor allem für den Einsatz von Fernwärmeleitungen empfiehlt.

Die Fühlerader einer Leckmessanordnung kann für sich mit einem wasserlöslichen Mantel umschlossen sein. Vorteilhaftere Handhabungsbedingungen ergeben sich allerdings, wenn die Fühlerader zusammen mit einer Rückführader den Kern eines Leckmesskabels mit einem den Mantel aus dem wasserlöslichen Polymer ergebenden Kabelmantel bildet, weil in diesem Fall beide Messadern in einem Leckmesskabel angeordnet sind und daher gemeinsam verlegt werden können. Dies gilt insbesondere dann, wenn das Leckmesskabel ein als Messerde dienendes, die Fühler- und Rückführadern umhüllendes Leitergeflecht aufweist, sodass die Leckmessanordnung nicht auf das Innenrohr als Messerde angewiesen ist.

### Kurze Beschreibung der Zeichnung

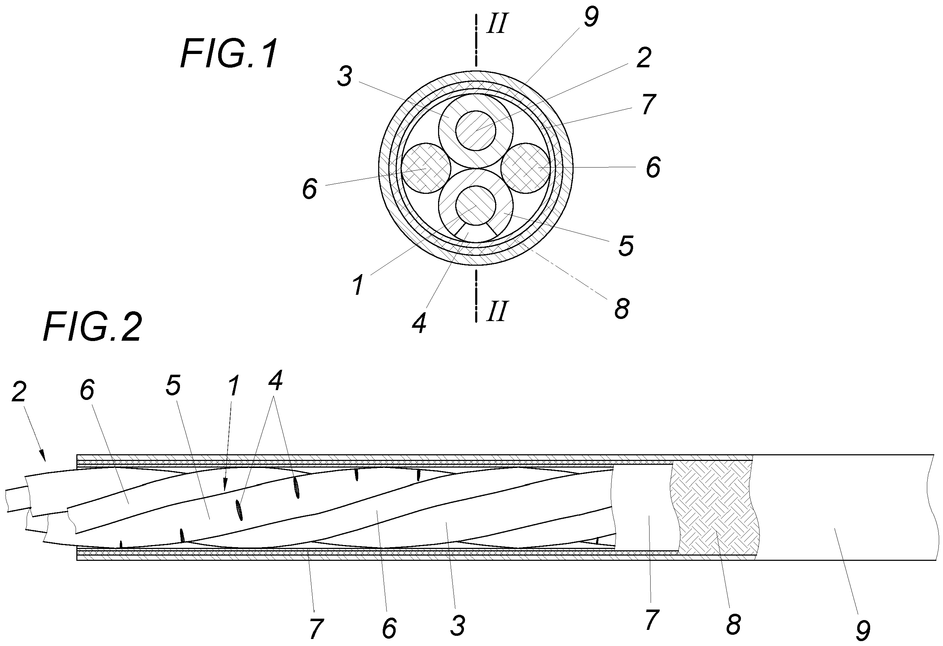

In der Zeichnung ist der Erfindungsgegenstand beispielsweise dargestellt. Es zeigen
- Fig. 1: ein erfindungsgemäßes Leckmesskabel in einem schematischen Querschnitt und
- Fig. 2: dieses Leckmesskabel in einer zum Teil aufgerissenen Seitenansicht.

### Weg zur Ausführung der Erfindung

Das dargestellte Leckmesskabel weist zwei Messadern auf, nämlich eine Fühlerader 1 und eine Rückführader 2, die durch eine Ummantelung 3 vollständig elektrisch isoliert ist. Die Fühlerader 1 kann blank ausgeführt sein, weist jedoch gemäß dem Ausführungsbeispiel eine mit regelmäßigen Durchtritten 4 versehene elektrisch isolierende Ummantelung 5 auf. Die beiden Messadern 1 und 2 sind mit zwei Quellgarnen 6 verseilt, sodass ein verseilter Kern erhalten wird, der unter Zwischenschaltung einer Zwischenlage 7 aus einem elektrisch isolierenden Geflecht aus Kunststofffasern von einem Leitergeflecht 8 als Messerde umhüllt wird. Das Leitergeflecht 8 wird durch einen Mantel 9 aus einem wasserlöslichen Polymer abgedeckt.

Ein auf diese Weise aufgebautes Leckmesskabel kann in einfacher Weise von einer Vorratstrommel abgezogen und zwischen dem wasserführenden Innenrohr und dem Außenrohr einer wärmegedämmten Wasserleitung, vorzugsweise einer Fernwärmeleitung, in die Wärmedämmung zwischen dem Innen- und dem Außenrohr eingeschäumt werden. Aufgrund der Verseilung des aus den Messadern 1 und 2 sowie den Quellgarnen 6 gebildeten Kerns wird eine Kernlängung möglich, wenn das Leckmesskabel im Bereich eines Außenbogens der Wasserleitung zu liegen kommt.

Beim Auftritt eines Lecks im wasserführenden Innenrohr einer wärmegedämmten Wasserleitung tritt die Feuchte in die Wärmedämmung zwischen Innen- und Außenrohr ein und bedingt bei einem Mantel 9 beispielsweise aus einem teilweise hydrolisierten Polyvinylalkohol eine Lösung bei einer z. B. 60 °C übersteigenden Wassertemperatur mit der Folge, dass Feuchtigkeit in das Leckmesskabel eintritt, sodass sich an der Eintrittsstelle der ohmsche Widerstand zwischen der durch das Leitergeflecht 8 bestimmten Messerde und der Fühlerader 1 verringert, was je nach dem Messverfahren zur Ortung der Leckstelle ausgenützt wird. Da mit der Feuchtezufuhr die Quellgarne 6 aufquellen und die vorhandenen Zwickelräume innerhalb des Mantels 9 ausfüllen, kann sich die Feuchte aus dem Leckbereich nicht in Längsrichtung des Leckmesskabels ausbreiten, sodass aufgrund der dadurch bedingten Beschränkung der Feuchte auf den Leckbereich die Leckstelle in vergleichsweise engen Grenzen geortet werden kann.

## Patentansprüche

1. Wasserleitung mit einer Wärmedämmung zwischen einem Innen- und einem Außenrohr und mit einer in der Wärmedämmung verlegten Leckmessanordnung, die eine einen Teil einer Messschaltung bildende, entlang der Wasserleitung verlaufende Fühlerader (1) und eine Rückführader (2) umfasst, **dadurch gekennzeichnet, dass** die Fühlerader (1) zusammen mit der Rückführader (2) den Kern eines Leckmesskabels bildet, das einen geschlossenen Mantel (9) aus einem wasserlöslichen Polymer aufweist.

2. Wasserleitung nach Anspruch 1, **dadurch gekennzeichnet, dass** der Mantel (9) ein wasserlösliches Polymer mit einer von der Temperatur abhängigen Löslichkeit umfasst.

3. Wasserleitung nach Anspruch 1 oder 2, **dadurch gekennzeichnet, dass** das wasserlösliche Polymer des Mantels (9) wenigstens ein Strukturelement aus der glucoseartige Zucker, Amidgruppen, Polyole und Ether enthaltenden Elementegruppe aufweist.

4. Wasserleitung nach Anspruch 3, **dadurch gekennzeichnet, dass** der Mantel (9) aus einem einen Polyvinylalkohol als wasserlösliches Polymer gefertigt ist.

5. Wasserleitung nach Anspruch 4, **dadurch gekennzeichnet, dass** der Polyvinylalkohol zur Einstellung einer vorgegebenen Wasserlöslichkeit einen bestimmten Hydrolysegrad aufweist.

6. Wasserleitung nach einem der Ansprüche 1 bis 5, **dadurch gekennzeichnet, dass** das Leckmesskabel ein als Messerde dienendes, die Fühler- und Rückführadern (1, 2) umhüllendes Leitergeflecht (8) aufweist.

## Claims

1. Water line having thermal insulation between an inner pipe and an outer pipe and having a leak measurement arrangement which is installed in the thermal insulation and comprises a sensor wire (1), which forms a part of a measurement circuit and extends along the water line, and a return wire (2), **characterised in that** the sensor wire (1) together with the return wire (2) forms the core of the leak measurement cable which has a closed sheath (9) consisting of a water-soluble polymer.

2. Water line as claimed in claim 1, **characterised in that** the sheath (9) comprises a water-soluble polymer having a solubility which is dependent upon the temperature.

3. Water line as claimed in claim 1 or 2, **characterised in that** the water-soluble polymer of the sheath (9) has at least one structural element from the element group including glucose-like sugars, amide groups, polyols and ethers.

4. Water line as claimed in claim 3, **characterised in that** the sheath (9) is produced from a polyvinyl alcohol as a water-soluble polymer.

5. Water line as claimed in claim 4, **characterised in that** the polyvinyl alcohol has a specific hydrolysis level for setting a specified water-solubility.

6. Water line as claimed in any one of claims 1 to 5, **characterised in that** the leak measurement cable has a conductor mesh (8) which serves as a signal ground and encases the sensor and return wires (1, 2).

## Revendications

1. Conduite d'eau avec une isolation thermique entre un tuyau intérieur et un tuyau extérieur et avec un dispositif de mesure de fuite installé dans l'isolation thermique qui comprend un conducteur de sonde (1) formant une partie d'un circuit de mesure, courant le long de la conduite d'eau, et un conducteur de retour (2), **caractérisée en ce que** le conducteur de sonde (1) forme avec le conducteur de retour (2) l'âme d'un câble de mesure de fuite qui présente une enveloppe fermée (9) en polymère hydrosoluble.

2. Conduite d'eau selon la revendication 1, **caractérisée en ce que** l'enveloppe (9) comprend un polymère hydrosoluble avec une solubilité dépendant de la température.

3. Conduite d'eau selon la revendication 1 ou 2, **caractérisée en ce que** le polymère hydrosoluble de l'enveloppe (9) présente au moins un élément structurel appartenant aux sucres de type glucose, aux groupes amides, aux polyols et au groupe d'éléments contenant de l'éther.

4. Conduite d'eau selon la revendication 3, **caractérisée en ce que** l'enveloppe (9) est fabriquée à partir d'un alcool polyvinylique en guise de polymère hydrosoluble.

5. Conduite d'eau selon la revendication 4, **caractérisée en ce que** l'alcool polyvinylique présente un degré d'hydrolyse déterminé pour atteindre une hydrosolubilité prédéfinie.

6. Conduite d'eau selon une des revendications 1 à 5, **caractérisée en ce que** le câble de mesure de fuite présente une tresse conductrice (8) servant de terre de mesure entourant les conducteurs de sonde et de retour (1, 2).
